# EUROPEAN PATENT SPECIFICATION

(11) **EP 1 395 010 B1**
(45) Date of publication and mention of the grant of the patent: **24.11.2004**
(21) Application number: 02360244.4
(22) Date of filing: 26.08.2002
(51) Int. Cl.: H04L 27/20, H04B 10/155

(54) **Optical frequency shift keying method**
Optisches Frequenzumtastverfahren
Procédé de modulation par déplacement de fréquence optique

(43) Date of publication of application: 03.03.2004
(73) Proprietor: ALCATEL, 75008 Paris (FR)
(72) Inventor: Wedding, Berthold, Dr., 70825 Korntal-Münchingen (DE)
(74) Representative: Urlichs, Stefan, Dipl.-Phys.

(56) References cited:
- EP-A- 0 643 497
- US-A- 5 513 219
- PROAKIS J G: "Digital Communications" DIGITAL COMMUNICATIONS, ELECTRICAL AND COMPUTER ENGINEERING. COMMUNICATIONS AND SIGNAL PROCESSING, NEW YORK, NY: MCGRAW-HILL, US, 1995, pages 196-197, XP002227495 ISBN: 0-07-113814-5

## Description

### Field of the Invention

The present invention relates to the field of optical transmission and more particularly to a method of transmitting an optical signal using optical frequency shift keying (FSK) modulation.

### Background of the Invention

Typically, optical transmission systems use intensity modulation (IM), i.e., a digital signal is modulated onto an optical carrier signal by modulating the amplitude of the optical carrier. Such systems suffer from certain limitations caused by fiber dispersion on the transmission link and laser chirp of directly modulated lasers in the transmitters. In addition, fiber non-linearity imposes further restrictions on such systems.

However, more advanced transmission methods use frequency shift keying (FSK), i.e. the optical frequency of the carrier is modulation with the digital signal to be transmitted. A method known as DST (Dispersion Supported Transmission) that uses optical FSK modulation is defined in ITU-T G.691 e, appendix III. Optical FSK permits longer fiber spans between signal regenerators and simplified transmitter design as it utilizes the chirp effect of directly modulated lasers.

A characterizing parameter of FSK modulation is the modulation index h, which is defined as the maximum frequency separation divided by the bitrate of the digital signal. Typically, this parameter h is chosen to be larger than 0,5. FSK modulation with h=0,5 is also known as MSK (Minimum Shift Keying), as 0,5 is typically the smallest value of h that should be used because under linear transmission influences the receiver sensitivity is drastically reduced at smaller values of h.

Document EP-A-0 643 497 describes a method for transmitting FSK signals over an optical fiber link. In contrast to the present invention the modulation index used is greater than ½.

It is an object of the present invention to provide an optical transmission method and system with increased maximum launch power of the optical signal, increased receiver sensitivity and higher spectral efficiency.

### Summary of the Invention

These and other objects are achieved by a method of transmitting a digital signal over an optical fiber link using frequency shift keying modulation at a modulation index h<0,5 and an optical power launched into the optical fiber is such that said fiber operates in a non-linear transmission regime. Under the impact of a non-linear transmission effect in the optical fiber, this surprisingly leads to an increase in maximum permitted launch power of the optical signal, increased receiver sensitivity and an increased spectral efficiency.

Using a directly modulated laser in the optical transmitter, the maximum bridgeable link loss for h<0,5 can be increased by about 3 dB with respect to the conventional MSK (h=0,5) at 10 Gbit/s transmission bitrate on a standard single mode fiber. The improvement compared with transmission systems using intensity modulation is even larger.

### Brief Description of the Drawings

A preferred embodiment of the present invention will now be described with reference to the accompanying drawings in which
- figure 1: shows an optical transmission system using FSK modulation;
- figure 2: shows in a measurement diagram a comparison of the required optical signal-to-noise ration (OSNR) between MSK (h=0,5) and FSK modulation according to the invention;
- figure 3: shows in a measurement diagram the increase in span loss of the FSK modulation according to the invention;
- figure 4: shows a measurement of an optical spectrum using prior art MSK modulation; and
- figure 5: shows a measurement of an optical spectrum using the FSK modulation according to the invention.

### Detailed Description of the Invention

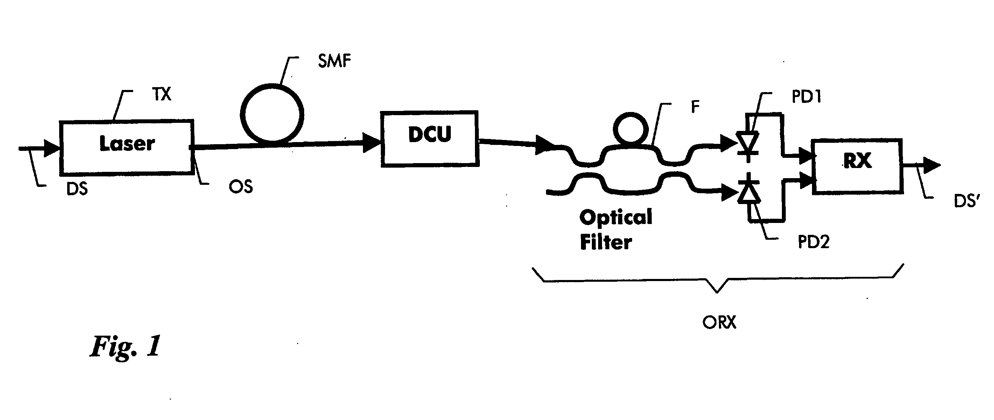

Figure 1 shows an embodiment of an optical transmission system using FSK modulation. An optical transmitter TX generates an optical FSK signal OS, i.e., an optical carrier signal which is modulated in frequency with a digital signal DS to be transmitted. The digital signal DS has a bitrate of 10,7 Gbit/s, which is the bitrate of the OTU2 signal as defined by the new standard for Optical Transport Networks (ITU-T G.709), capable of transporting an STM-64 signal of the Synchronous Digital Hierarchy.

In the embodiment, a directly modulated laser diode is used as optical transmitter TX. This is a very simple and cost effective implementation of an optical transmitter, because it utilizes the chirp effect of the laser diode to modulate the optical carrier generated by the laser in frequency. The underlying physical effect is that the bias current modulates the refractive index of the laser diode. This causes a modulation of the optical length of the laser cavity and thus a modulation of the wavelength of the optical signal, which corresponds to a frequency modulation. The modulation of the bias current further causes an undesired intensity modulation. However, if the DC bias component is large compared to the AC bias component of the digital signal DS, the intensity modulation is relatively small compared to the frequency modulation. In the embodiment, the DC bias component is chosen to be 60mA while the digital signal adds an AC bias component of 13mA peak-to-peak (for a typical laser FM-efficiency of 400 MHz/mA).

The optical signal OS is transmitted over an optical fiber SMF, which in the embodiment is a standard single mode fiber. At the receive side end of the optical fiber SMF, the optical signal OS is fed to an optical receiver ORX which performs optical demodulation to recover the digital signal DS'. As shown in figure 1, the optical receiver ORX contains an optical filter F, a pair of photo diodes PD1, PD2 coupled to the filter and a differential receiver RX.

The optical filter coverts the FSK modulation into IM modulation. In the embodiment, the optical filter is a Mach-Zehnder-Interferometer (MZI), which can be realized based on fibers, e.g. with fused fiber couplers, or based on integrated optics. The output from the two interferometer arms of the MZI is applied to photodiodes PD1, PD2. The advantage of a MZI filter as in the preferred embodiment is that the two interferometer arms can be connect via corresponding photodiodes PD1, PD2 to a differential receiver RX. In this configuration, residual intensity modulation and optical intensity noise, e.g. such as introduced by optical amplifiers, can be reduced, thus, leading to increased receiver sensitivity.

In an even more preferred embodiment, the optical receiver OR is an adaptive receiver, for instance a receiver with adaptive electronic equalization features, instead of a conventional optical receiver. The advantages of differential detection and adaptive electronic equalization can be combined in a preferred way by using separate adaptive electronic linear equalizer filters and combining the signals before regeneration. Instead of an MZI, other types of optical filters such as fiber gratings or Bragg gratings can also be applied.

Optionally, fiber dispersion can be compensated by an optical dispersion compensation unit (DCU). Optical amplifiers (not shown in figure 1) can also be applied in the system along the transmission link SMF. For example optical amplifiers can be placed after the transmitter TX as an optical booster amplifier and in front of the optical demodulator filter F as an optical preamplifier.

Measurements have been carried out at a bitrate of 10,7 Gbit/s using a directly modulated laser as an optical transmitter, a booster EDFA (Erbium-doped fiber amplifier), a single mode fiber with optical dispersion compensation at the receiver side, an optical pre-amplifier (EDFA), an ASE noise filter, a fiber based MZI as optical demodulator and an adaptive optical receiver with only single photodiode input (as compared to twin photodiode input in figure 1). ASE stands for Amplified Spontaneous Emission. Optical amplifiers produce in addition to the amplified optical signal a broadband noise signal due to ASE. An EDFA for instance produces ASE noise typically in the range between 1530nm and 1560nm. The ASE noise filter is a narrow band pass filter with a spectral width of about 1 nm and serves to reduce this ASE noise signal in the receiver.

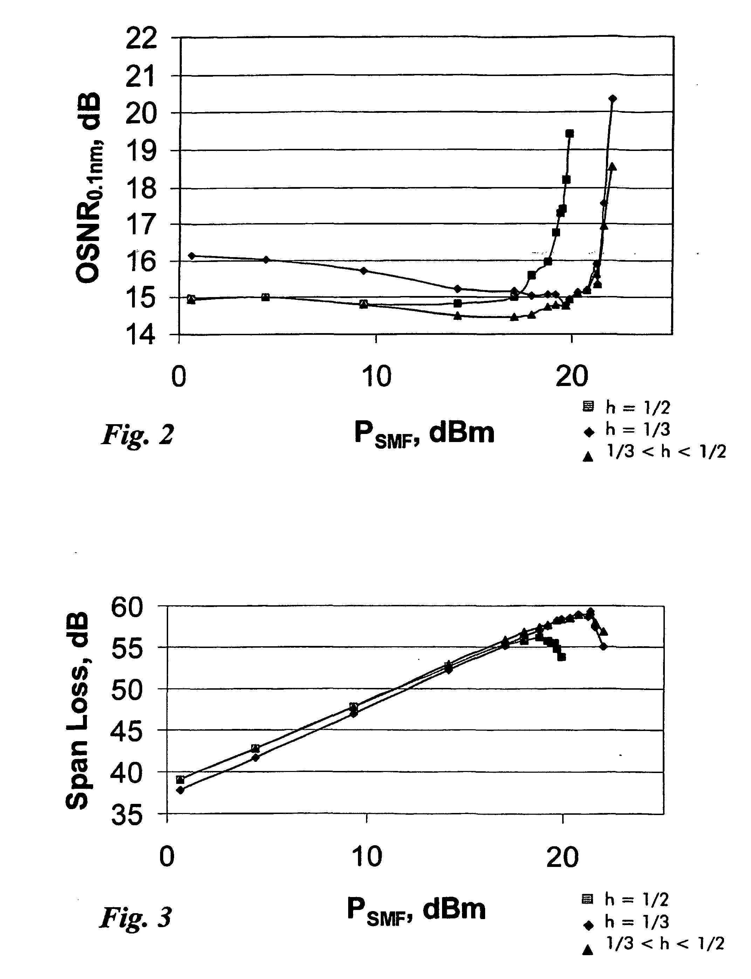

As an experimental result, the optical signal to noise ratio (OSNR) required to obtain a bit-error-ratio (BER) of 10⁻⁵ versus mean optical power P_{SMF} launched into the fiber is shown in Figure 2 for different values of the modulation index h as a parameter.

It was commonly accepted in the art that the minimum value of the modulation index h that can be applied is h = 1/2, i.e., the FSK frequency separation is half the bitrate. It was commonly understood in the art that this is necessary to ensure the orthogonality of the signals for mark and space (see for example the widely known text book "Digital Communications" by John G. Proakis, third edition 1995, page 197). FSK modulation with h = 1/2 is therefore called Minimum-Shift Keying (MSK). For linear transition, i.e. in the regime of low power transmission (P_{SMF} ≈ 0 dBm), the experimental results in figure 2 indeed show the best performance, i.e. the lowest OSNR value for h≈1/2 (MSK). For a lower modulation index h≈1/3 a larger OSNR is required at low power to achieve the same BER.

In the non-linear regime at P_{SMF}≈20 dBm, however, i.e., under the influence of fiber non-linearity, the situation is completely different: The results shown in figure 2 clearly demonstrate that the performance using a reduced modulation index of h≈1/3 is much better than for h ≈1 /2 (MSK). The non-linearity limit, i.e. the maximum possible P_{SMF} for a certain OSNR penalty is significantly increased. Also shown in figure 2 is a third measurement curve where for each value of P_{SMF} the best modulation index h = hₘᵢₙ was used in order to obtain the minimum value of OSNR. The best modulation index hₘᵢₙ in this curve is in the range between 1/2 and 1/3. These results thus show that hₘᵢₙ<1/2 and that a better receiver sensitivity (i.e., a lower OSNR) and an increased non-linearity limit is achieved as compared to h ≈1/2 (MSK).

The improvement in transmission characteristics is due to a non-linear effect in the optical fiber that is known as the optical Kerr effect, which causes a modulation of the refractive index in the optical fiber by the optical signal at higher power levels (>10dBm), which distorts the optical signal. This effect typically limits the maximum optical power that can be launched into the optical fiber because at some point, the effect becomes pre-dominant and distorts the optical signal on its way through the optical fiber so much that signal recovery at the receiver side can no longer be achieved without unacceptable high bit error rate. However, the use of a lower modulation index h<1/2 now surprisingly reduces the signal distortion at higher power levels (between OdBm and 20dBm) and shifts the limit for maximum optical launch power towards higher levels (>20dBm).

Obviously, a higher power input signal can pass through a longer fiber span without amplification and signal regeneration. To demonstrate the improvement by the invention in terms of fiber loss, the bridgeable span loss versus launch power P_{SMF} is shown in figure 3. As can be seen, the measurements show that for a reduced modulation index h<1/2, the maximum bridgeable span loss can be increased as compared to h ≈1/2 (MSK). In this experiment the measured improvement in span loss was 3.2 dB. The launch power P_{SMF} can be increased by 2.6 dB.

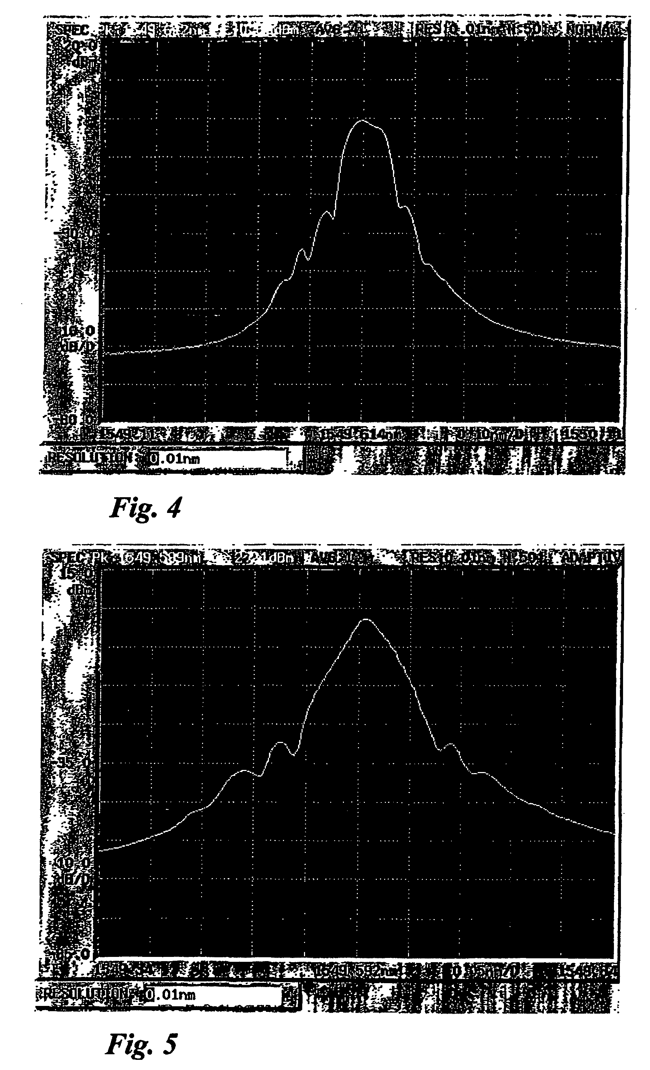

As can be seen from figures 4 and 5, the spectral width of the optical signal from the transmitter is also reduced when a reduced modulation index is applied (note the different horizontal scales). For example, the -10 dB width is reduced to about 60% of the MSK value. Therefore, the invention also increases spectral efficiency, as more frequency channels would fit into a given spectral band.

As a conclusion, it can be said that while it was widely accepted in the art that h= 1/2 is the minimum modulation index for FSK that should be applied, we found out that in the non-linear regime the performance is improved by the use of a reduced modulation index h<1/2. This improves certain transmission characteristics: Due to the fiber non-linearity, the maximum launch power is increased. The receiver sensitivity is increased (lower OSNR) the bridgeable span loss is increased and the spectral width is decreased (higher spectral efficiency).

## Claims

1. A method of transmitting a digital signal (DS) over an optical fiber link (SMF), said method comprising the steps of
- modulating said digital signal (DS) onto an optical carrier using frequency shift keying modulation;
- coupling said frequency modulated optical signal (OS) into an optical fiber (SMF);
- at the receive side end of said optical fiber (SMF), demodulating the received optical signal (OS) to obtain said transmitted digital signal (DS');
**characterized in that**
for said frequency shift keying modulation step, a modulation index h<1/2 is used, and an optical power launched into the optical fiber is such that said fiber (SMF) operates in a non-linear transmission regime to improve transmission characteristics, said modulation index h being defined as maximum frequency separation divided by the bitrate of said digital signal.

2. A method according to claim 1, wherein said modulation index h is in the range between 1/2 and 1/4.

3. A method according to claim 1, wherein said modulation index h is 1/3.

4. An optical transmission system comprising an optical transmitter (TX), an optical fiber (SMF) and an optical receiver (SRX), wherein said fiber (SMF) showing a non-linear transmission effect, said optical transmitter (TX) being adapted to modulate a digital signal (DS) to be transmitted onto an optical carrier using frequency shift keying modulation,
**characterized in that**
said optical transmitter is adapted to use for said frequency shift keying modulation a modulation index h<½, and an optical power launched into the optical fiber is such that said fiber (SMF) operates in a non-linear transmission regime to improve transmission characteristics, said modulation index h being defined as maximum frequency separation divided by the bitrate of said digital signal.

5. An optical transmission system according to claim 4 further comprising an optical dispersion compensation module (DCM).

6. An optical transmission system according to claim 4, wherein said receiver comprising an optical filter (F) to demodulate the optical signal (OS).

7. An optical transmission system according to claim 6, wherein said optical filter (F) is a Mach-Zehnder interferometer which two interferometer arms being coupled to corresponding photodiodes (PD1, PD2) which are in turn coupled to a differential electrical receiver (RX).

8. An optical transmitter (TX) for an optical transmission system, said optical transmitter being adapted to modulate a digital signal (DS) to be transmitted over an optical fiber link (SMF) onto an optical carrier using frequency shift keying modulation,
**characterized in that**
said optical transmitter is adapted to use for said frequency shift keying modulation a modulation index h<1/2,and an optical power launched into the optical fiber is such that said fiber (SMF) operates in a non-linear transmission regime to improve transmission characteristics, said modulation index h being defined as maximum frequency separation divided by the bitrate of said digital signal (DS).

9. An optical transmitter according to claim 8 comprising a directly modulated laser.

## Patentansprüche

1. Ein Verfahren zur Übertragung eines Digitalsignals (DS) über eine optische Faserstrecke (SMF), wobei das Verfahren die folgenden Schritte umfasst:
- Modulation des Digitalsignals (DS) auf einen optischen Träger unter Verwendung der Frequenzumtastungs-Modulation;
- Kopplung des frequenzmodulierten optischen Signals (OS) in eine optische Faser (SMF);
- Auf der Empfangsseite der optischen Faser (SMF) Demodulation des empfangenen optischen Signals (OS), um das gesendete Digitalsignal DS' zu erhalten;
**dadurch gekennzeichnet, dass**
für den Schritt der Frequenzumtastungs-Modulation ein Modulationsindex h<1/2 verwendet wird und die in die Faser eingespeiste optische Leistung so ist, dass die Faser (SMF) im nichtlinearen Übertragungsbereich arbeitet, um die Übertragungseigenschaften zu verbessern, wobei der Modulationsindex h als maximaler Frequenzabstand dividiert durch die Bitrate des Digitalsignals definiert ist.

2. Ein Verfahren gemäß Anspruch 1, worin der Modulationsindex h im Bereich zwischen 1/2 und 1/4 liegt.

3. Ein Verfahren gemäß Anspruch 1, worin der Modulationsindex h gleich 1/3 ist.

4. Ein optisches Übertragungssystem, das einen optischen Sender (TX), eine optische Faser (SMF) und einen optischen Empfänger (SRX) enthält, worin die Faser (SMF) einen nichtlinearen Übertragungseffekt zeigt, der optische Sender (TX) angepasst ist, ein zu übertragendes Digitalsignal (DS) auf einen optischen Träger zu modulieren, wozu die Frequenzumtastungs-Modulation verwendet wird.
**dadurch gekennzeichnet, dass**
der optische Sender so angepasst ist, dass er für die Frequenzumtastungs-Modulation einen Modulationsindex h<1/2 verwendet und eine in die Faser eingespeiste optische Leistung so ist, dass die Faser (SMF) in einem nichtlinearen Übertragungsbereich arbeitet, um die Übertragungseigenschaften zu verbessern, wobei der Modulationsindex h als maximaler Frequenzabstand dividiert durch die Bitrate des Digitalsignals definiert ist.

5. Ein optisches Übertragungssystem gemäß Anspruch 4, das weiterhin ein optisches Dispersions-Kompensations-Modul (DCM) enthält.

6. Ein optisches Übertragungssystem gemäß Anspruch 4, worin der Empfänger ein optisches Filter (F) zur Demodulation des optischen Signals (OS) enthält.

7. Ein optisches Übertragungssystem gemäß Anspruch 6, worin das optische Filter (F) ein Mach-Zehnder-Interferometer ist, dessen beide Interferometer-Arme an entsprechende Fotodioden (PD1, PD2) gekoppelt sind, die wiederum an einen elektrischen Differenz-Empfänger (RX) gekoppelt sind.

8. Ein optischer Sender (TX) für ein optisches Übertragungssystem, wobei der optische Sender so angepasst ist, dass er ein über eine optische Faserstrecke (SMF) zu übertragendes Digitalsignal (DS) auf einen optischen Träger moduliert, wozu er die Frequenzumtastungs-Modulation verwendet,
**dadurch gekennzeichnet, dass**
der optische Sender so angepasst ist, dass er für die Frequenzumtastungs-Modulation einen Modulationsindex h<1/2 verwendet, und eine in die Faser eingespeiste optische Leistung so ist, dass die Faser (SMF) im nichtlinearen Übertragungsbereich arbeitet, um die Übertragungseigenschaften zu verbessern, wobei der Modulationsindex h als maximaler Frequenzabstand dividiert durch die Bitrate des Digitalsignals (DS) definiert ist.

9. Ein optischer Sender gemäß Anspruch 8, der einen direkt modulierten Laser enthält.

## Revendications

1. Procédé de transmission d'un signal numérique (DS) sur une liaison en fibres optiques (SMF), ledit procédé comprenant les étapes consistant à :
moduler ledit signal numérique (DS) sur un support optique à l'aide de la modulation par déplacement de fréquence ;
coupler ledit signal optique (OS) modulé en fréquence dans une fibre optique (SMF) ;
au niveau de l'extrémité côté récepteur de ladite fibre optique (SMF), démoduler le signal optique reçu (OS) pour obtenir ledit signal numérique transmis (DS') ;
**caractérisé en ce que**
pour ladite étape de modulation par déplacement de fréquence, un indice de modulation h < ½ est utilisé et une puissance optique lancée dans la fibre optique est telle que ladite fibre (SMF) opère dans un régime de transmission non linéaire pour améliorer les caractéristiques de transmission, ledit indice de modulation h étant défini en tant que séparation de fréquence maximum divisée par le débit binaire dudit signal numérique.

2. Procédé selon la revendication 1, dans lequel ledit indice de modulation h se trouve dans la plage entre ½ et ¼.

3. Procédé selon la revendication 1, dans lequel ledit indice de modulation h est 1/3.

4. Système de transmission optique comprenant un émetteur optique (TX), une fibre optique (SMF) et un récepteur optique (SRX), dans lequel ladite fibre (SMF) montre un effet de transmission non linéaire, ledit émetteur optique (TX) est adapté pour moduler un signal numérique (DS) à transmettre sur un support optique à l'aide d'une modulation par déplacement de fréquence,
**caractérisé en ce que**
ledit émetteur optique est adapté pour utiliser pour ladite modulation par déplacement de fréquence un indice de modulation h < ½, et une puissance optique lancée dans la fibre optique est telle que la fibre (SMF) opère dans un régime de transmission non linéaire pour améliorer les caractéristiques de transmission, ledit indice de modulation h étant défini en tant que séparation de fréquence maximum divisée par le débit binaire dudit signal numérique.

5. Système de transmission optique selon la revendication 4, comprenant en outre un module de compensation de dispersion optique (DCM).

6. Système de transmission optique selon la revendication 4, dans lequel ledit récepteur comprend un filtre optique (F) pour démoduler le signal optique (OS).

7. Système de transmission optique selon la revendication 6, dans lequel ledit filtre optique (F) est un interféromètre Mach-Zehnder dont les deux bras d'interféromètre sont couplés à des photodiodes correspondantes (PD1, PD2) qui sont à leur tour couplées à un récepteur électrique différentiel (RX).

8. Emetteur optique (TX) pour un système de transmission optique, ledit émetteur optique étant adapté pour moduler un signal numérique (DS) à émettre sur une liaison en fibre optique (SMF) sur un support optique utilisant la modulation par déplacement de fréquence,
**caractérisé en ce que**
ledit émetteur optique est adapté pour utiliser pour ladite modulation par déplacement de fréquence, un indice de modulation h < ½, et une puissance optique lancée dans la fibre optique est telle que ladite fibre (SMF) opère dans un régime de transmission non linéaire pour améliorer les caractéristiques de transmission, ledit indice de modulation h étant défini comme une séparation de fréquence maximum divisée par le débit binaire dudit signal numérique (DS).

9. Emetteur optique selon la revendication 8 comprenant un laser modulé directement.
